# EUROPÄISCHE PATENTSCHRIFT

(11) **EP 3 031 316 B1**
(45) Veröffentlichungstag und Bekanntmachung des Hinweises auf die Patenterteilung: **22.11.2017**
(21) Anmeldenummer: 15186141.6
(22) Anmeldetag: 22.09.2015
(51) Int. Cl.: A01F 7/06

(54) **DRESCHTROMMEL**
THRESHING DRUM
TAMBOUR BATTEUR

(30) Priorität: 11.12.2014 DE 102014118390
(43) Veröffentlichungstag der Anmeldung: 15.06.2016
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Nathan, Christoph, Omaha, NE Nebraska 68122 (US)

(56) Entgegenhaltungen:
- EP-A1- 1 559 307
- DE-A1- 2 845 270
- DE-A1- 2 909 254

## Beschreibung

Die vorliegende Erfindung betrifft eine Dreschtrommel gemäß dem Oberbegriff des Anspruches 1. Weiterhin betrifft die Erfindung einen Mähdrescher gemäß Anspruch 15. Eine Dreschtrommel beziehungsweise ein Mähdrescher der eingangs genannten Art ist aus der WO 2010/086063 A1 bekannt. Der Mähdrescher umfasst ein nach dem Tangentialflussprinzip arbeitendes Dreschwerk und eine nach dem Axialflussprinzip arbeitende Abscheidevorrichtung, welche zwei parallel zueinander angeordnete Axialrotoren aufweist. Das Dreschwerk umfasst eine Dreschtrommel sowie eine dieser nachgeordnete Zuführtrommel, die das von der Dreschtrommel abgegebene Erntegut der der Zuführtrommel nachgeordneten, nach dem Axialflussprinzip arbeitenden Abscheidevorrichtung zuführt. Die Dreschtrommel weist einen aus mehreren zylindrischen Grundelementen gebildeten Trommelkörper auf, auf dessen Umfangsfläche mehrere, zueinander beabstandete Schlagleisten angeordnet sind, die sich über die Breite des Trommelkörpers erstrecken und den Trommelkörper in radialer Richtung abschnittsweise überragen. Der Dreschtrommel ist weiterhin ein Abscheidekorb zugeordnet, durch den ausgedroschenes Erntegut abgeschieden wird. Die Zuführtrommel ist im Einlaufbereich der Abscheidevorrichtung angeordnet, und dient der Zuführung des Erntegutes in die Abscheidevorrichtung. Die WO 2010/086063 A1 thematisiert die Aufteilung der Erntegutzuführung zu dem jeweiligen Axialrotor der Abscheidevorrichtung durch die Zuführtrommel. Dabei stößt die Zuführtrommel bei geringen Umfangsgeschwindigkeiten und/oder hohen Erntegutdurchsätzen hinsichtlich der Aufteilung des Erntegutstromes der Zuführtrommel an ihre Grenzen.

Demgegenüber zeigen die Druckschriften DE 29 09 254 A1 und DE 28 45 270 A1 jeweils einen Axialfluss- Mähdrescher, deren Axialrotoren jeweils einen Dreschteil aufweisen, über den sich Dreschleisten erstrecken. Zwischen den Dreschleisten sind Förderelemente vorgesehen.

Aufgabe der vorliegenden Erfindung ist es, eine Dreschtrommel bereitzustellen, die zu einer Unterstützung der Erntegutaufteilung beiträgt. Weiterhin ist es die Aufgabe der Erfindung, einen Mähdrescher bereitzustellen, der sich durch eine verbesserte Aufteilung bei der Zuführung von Erntegut von einem Tangentialdreschwerk an eine nach dem Axialflussprinzip arbeitende Abscheidevorrichtung auszeichnet.

Diese Aufgabe wird erfindungsgemäß wird hinsichtlich der Dreschtrommel durch die Merkmale des Anspruches 1 und hinsichtlich des Mähdreschers durch die Merkmale des Anspruches 15 gelöst.

Gemäß dem Anspruch 1 wird vorgeschlagen, dass zwischen zwei zueinander beabstandeten Schlagleisten jeweils ein sich in radialer und zumindest abschnittsweise in tangentialer Richtung erstreckendes Leitelement angeordnet ist, welches zu einer senkrecht zur Rotationsachse der Dreschtrommel stehenden Bezugsebene unter einem Winkel zu dieser geneigt ist. Die Unterstützung der Aufteilung des Erntegutstromes setzt mittels der auf der Dreschtrommel angeordneten Leitelemente zu einem frühen Zeitpunkt ein. Die Wegstrecke des Erntegutes, über welche hinweg die Leitelemente der Dreschtrommel auf das Erntegut einwirken können, ist wegen des größeren Durchmessers der Dreschtrommel länger. Des Weiteren ist die Flussgeschwindigkeit des Erntegutes relativ zu der Umfangsgeschwindigkeit der Dreschtrommel geringer, so dass die Leitelemente während einer Umdrehung der Dreschtrommel häufiger mit dem Erntegut in Eingriff gelangen können. Die Anordnung des jeweiligen Leitelementes kann mittelbar oder unmittelbar an den Schlagleisten erfolgen.

Dabei sollte das jeweilige Leitelement derart auf der Dreschtrommel ausgerichtet sein, dass es sich in Rotationsrichtung der Dreschtrommel verjüngenden Verlauf in Bezug auf die Bezugsebene aufweist.

Vorzugsweise kann das jeweilige Leitelement eine zumindest bis zum Hüllkreis der Schlagleisten reichende radiale Erstreckung aufweisen. Somit stehen die Leitelemente mit dem Erntegut in Eingriff. Die Leitelemente können auch über den Hüllspalt hinausragen. Dies ist abhängig von dem Abstand zwischen dem Dreschkorb und der Dreschtrommel und/oder dem Abstand zwischen der Dreschtrommel und der Zuführtrommel.

Vorteilhafterweise können die Leitelemente in Umfangsrichtung im Wesentlichen fluchtend hintereinander angeordnet sein. Eine in Umfangsrichtung der Dreschtrommel im Wesentlichen fluchtende Anordnung der Leitelemente trägt zu einer gleichmäßigen Aufteilung des Erntegutes bei.

In einer bevorzugten Ausführungsform können die Leitelemente in Umfangsrichtung wechselweise versetzt angeordnet sein. Die Anordnung der Leitelemente kann so gewählt sein, dass es in Umfangsrichtung alternierend zu der Bezugsebene auf der Dreschtrommel angeordnet ist.

Insbesondere sollten die Leitelemente im Wesentlichen mittig auf der Dreschtrommel angeordnet sein. Der axiale Abstand des jeweiligen Leitelementes zu den Außenkanten der Dreschtrommel sollte in etwa gleich groß sein. Hinsichtlich einer mengenmäßig gleichmäßigen Aufteilung des von der Dreschtrommel geförderten Erntegutes ist diese Anordnung von Vorteil.

Vorteilhafterweise können die Leitelemente lösbar an der Dreschtrommel befestigt sein. Da die Leitelemente auf der Dreschtrommel mit dem Erntegut in Berührung kommen und damit einem Verschleiß unterliegen, ist ein einfacher Austausch einzelner Leitelemente im Bedarfsfall möglich. Um den Verschleiß zu reduzieren, können die Leitelemente mit einer Hartstoffbeschichtung ausgeführt sein. Alternativ können die Leitelemente zumindest an ihren mit dem Erntegut in Berührung kommenden Oberflächen mit daran angeordneten Verschleißleisten ausgeführt sein, die aus einem verschleißbeständigen Material bestehen.

Ebenso kann eine Nachrüstbarkeit von Dreschtrommeln vorgesehen sein, die nicht von vorneherein mit Leitelementen ausgeführt sind. Hierzu kann das jeweilige Leitelement auf einem Befestigungsabschnitt angeordnet sein, dessen Form an die Außenkontur der Dreschtrommel zwischen den Schlagleisten angepasst ist. Der Befestigungsabschnitt kann mit der Dreschtrommel durch auf Formschluss basierende Mittel verbunden werden.

Vorzugsweise kann sich der Befestigungsabschnitt abschnittsweise in axialer und tangentialer Richtung der Dreschtrommel zwischen jeweils benachbarten Schlagleisten erstrecken.

Insbesondere kann die Dreschtrommel eine geschlossene Mantelfläche aufweisen. Bei der Ernte bestimmter Erntegutarten ist die Verwendung einer geschlossenen Dreschtrommel vorteilhaft. Dabei kann der Trommelkörper eine geschlossene Mantelfläche aufweisen. Auf dem Trommelkörper können Tragprofile angeordnet sein, an denen die Schlagleisten lösbar befestigbar sind. Die Tragprofile können zumindest abschnittsweise mit Ausnehmungen versehen sein. Diese Ausnehmungen können der Aufnahme und/oder Befestigung des Befestigungsabschnittes des jeweiligen Leitelementes dienen.

Gemäß einer alternativen Ausführung kann die Dreschtrommel offen ausgeführt sein.

Hierbei kann die Dreschtrommel mit Abdeckblechen zumindest abschnittsweise verschließbar ausgeführt sein, welche auf ihrer dem Trommelinneren abgewandten Seite mit Leitelementen versehen sind. Die Abdeckbleche können bei offen ausgeführten Dreschtrommeln bei bestimmten Erntegutarten wie Mais zum Einsatz kommen. Die Abdeckbleche erstrecken sich abschnittsweise in axialer und tangentialer Richtung der Dreschtrommel.

Insbesondere können die Leitelemente auf die Abdeckbleche aufgeschweißt oder aufgeschraubt sein. Somit kann einerseits der Montageaufwand reduziert werden, andererseits erfordert ein Austausch eines Leitelementes lediglich den Wechsel eines einzelnen Abdeckbleches beziehungsweise im Fall eines aufgeschraubten Leitelementes nur dessen Wechsel.

Weiterhin wird die eingangs formulierte Aufgabe durch einen Mähdrescher gemäß Anspruch 15 gelöst. Der erfindungsgemäße Mähdrescher, mit einem nach dem Axialflussprinzip arbeitenden Abscheidevorrichtung, zeichnet sich durch eine Drescheinrichtung mit zumindest einer Dreschtrommel nach einem der Ansprüche 1 bis 14 aus.

Die vorliegende Erfindung wird anhand von in den Zeichnungen dargestellten Ausführungsbeispielen näher erläutert.

Es zeigen:
- Fig. 1: ein schematischer Ausschnitt eines Mähdreschers;
- Fig. 2: eine perspektivische Ansicht einer geschlossenen Dreschtrommel mit darauf angeordneten Leitelementen;
- Fig. 3: eine Draufsicht auf die Dreschtrommel gemäß Fig. 2;
- Fig. 4: eine Draufsicht auf die Dreschtrommel gemäß Fig. 2 mit einer zweiten Ausführungsform der Leitelemente;
- Fig. 5: eine Draufsicht auf die Dreschtrommel gemäß Fig. 2 mit darauf angeordneten Leitelementen gemäß einer dritten Ausführungsform;
- Fig. 6: eine perspektivische Ansicht einer offenen Dreschtrommel mit darauf angeordneten Leitelementen;

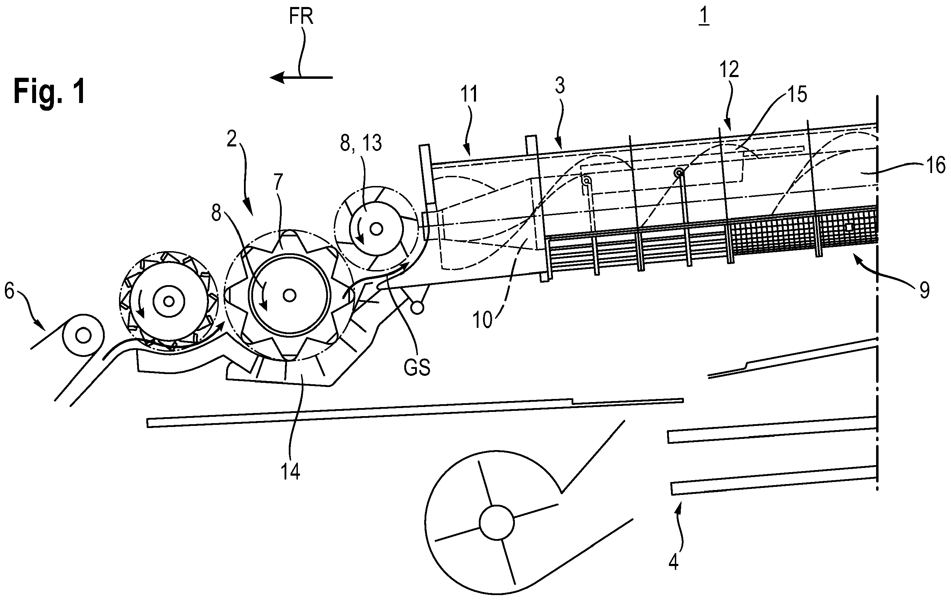

In Fig. 1 ist ein schematischer Ausschnitt eines selbstfahrenden Mähdrescher 1 dargestellt, der mit einer nach dem Tangentialflussprinzip arbeitenden Drescheinrichtung 2 und einer der Drescheinrichtung 2 nachgeordneten, nach dem Axialflussprinzip arbeitenden Abscheidevorrichtung 3 ausgerüstet ist. Zu verarbeitendes Erntegut wird von einem Vorsatzgerät, wie einem Schneidwerk oder einem Maispflücker, aufgenommen. Das Vorsatzgerät führt das Erntegut einem Schrägförderer 6 zu. Der Schrägförderer 6 übergibt das Erntegut an die Drescheinrichtung 2, welche das Erntegut mechanisch bearbeitet. Von der Drescheinrichtung 2 gelangt ein im Wesentlichen von ausgedroschenen Halmen gebildeter Gutstrom GS mittels eines als eine Zuführtrommel 13 ausgeführten Fördermittels 8 in die Abscheidevorrichtung 3. Die Drescheinrichtung 2 umfasst zumindest eine Dreschtrommel 7 sowie zumindest einen Dreschkorb 14, der die Dreschtrommel 7 abschnittsweise umschließt. Der Abstand zwischen der Dreschtrommel 7 und dem Dreschkorb 14 ist veränderbar. Die Abstandsänderung erfolgt in Abhängigkeit von der zu verarbeitenden Erntegutart, wie Getreide, Bohnen oder Mais, sowie den Betriebsbedingungen, wie Erntegutfeuchte und/oder anderen Parameter.

Der Axialabscheidevorrichtung 3 besteht gemäß dem in Fig. 1 dargestellten Ausführungsbeispiel aus zwei parallel in Fahrtrichtung FR des Mähdreschers 1 hintereinander liegenden bereichsweise als Sieb- oder Lochfläche ausgebildeten Rotorgehäusen 9, in denen jeweils ein rotierend angetriebener Trennrotor 10 angeordnet ist, wobei die Abscheidevorrichtung 3 einen Einlaufbereich 11 beziehungsweise Annahmebereich und einen diesem nachgeordneten Abscheidebereich 12 aufweist.

In dem Einlaufbereich 11 ist jeder Trennrotor 10 als mit Fördermitteln bestückter Kegelstumpf und im Abscheidebereich 12 als mit beispielsweise Förderelementen 15 besetztes zylinderförmiges Kernrohr 16 ausgebildet, wobei der große Durchmesser des Kegelstumpfes dem Durchmesser des Kernrohrs 16 entspricht. Die Förderelemente 15 transportieren im Zusammenwirken mit innerhalb des Abscheidebereiches 12 im Rotorgehäuse 9 angebrachten Führungsleisten den Gutstrom GS in den rückwärtigen Bereich des Mähdreschers 1, wobei insbesondere die noch in dem Gutstrom GS enthaltenen Körner, sowie eventuell Kurzstroh und Spreu durch eine Reinigungseinrichtung 4 abgetrennt und abgeschieden werden. Die Reinigungseinrichtung 4 weist ein oder mehrere schwingend angetriebene Siebe sowie ein Gebläse 5 auf.

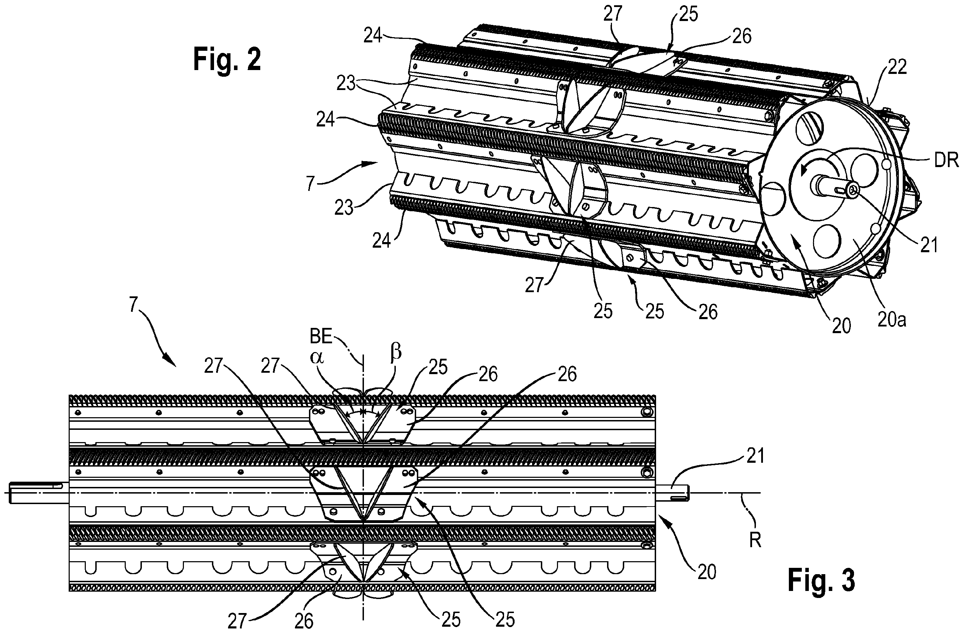

Die Darstellung gemäß Fig. 2 zeigt eine perspektivische Ansicht der Dreschtrommel 7, die in dem dargestellten Ausführungsbeispiel geschlossen ausgeführt ist, mit darauf angeordneten Leitelementen 25. Die Dreschtrommel 7 umfasst einen Trommelkörper 20, der als ein hohlzylindrisches, eine geschlossene Mantelfläche aufweisendes Grundelemente 20a ausgebildet ist. Der Trommelkörper 20 weist beidendig eine Antriebswelle 21 auf die mit dem Trommelkörper 20 drehfest verbunden ist. Ein mit DR bezeichneter Pfeil beschreibt die Rotationsrichtung der Dreschtrommel 7. Auf der Mantelfläche 22 des Trommelkörpers 20 sind in Umfangsrichtung verteilt Tragprofile 23 zueinander beabstandet angeordnet. Die Tragprofile 23 erstrecken sich im Wesentlichen über die Breite der Dreschtrommel 7. Auf den Tragprofilen 23 sind Schlagleisten 24 lösbar befestigt. Die Schlagleisten 24 erstrecken sich in axialer Richtung über die Breite des Trommelkörpers 20. In radialer Richtung überragen die auf den Tragprofilen 23 angeordneten Schlagleisten 24 den Trommelkörper 20.

Zwischen zwei zueinander beabstandeten Schlagleisten 24 ist jeweils zumindest ein sich in radialer Richtung und zumindest abschnittsweise in tangentialer Richtung der Dreschtrommel 7 erstreckenden Leitelement 25 angeordnet. Das Leitelement 25 umfasst einen Befestigungsabschnitt 26, auf welchem zumindest ein Leitabschnitt 27 angeordnet ist. Der Befestigungsabschnitt 26 erstreckt sich jeweils abschnittsweise in axialer und tangentialer Richtung der Dreschtrommel 7. Der im Wesentlichen senkrecht zum Befestigungsabschnitt 26 Leitabschnitt 27 ist im vorliegenden Ausführungsbeispiel V-förmig ausgebildet. Die Anordnung der Leitelemente 25 erfolgt im Wesentlichen mittig auf der Dreschtrommel, so dass eine möglichst gleichmäßige mengenmäßige Aufteilung des Erntegutes erreicht wird. Das jeweilige Leitelement 25 weist eine zumindest bis zum Hüllkreis der Schlagleisten 24 reichende radiale Erstreckung auf. Somit ist ein steter Eingriff mit in den Erntegutstrom gewährleistet. Die radiale Erstreckung der Leitelemente 25 beziehungsweise des zumindest einen Leitabschnittes 27 kann auch über den Hüllkreis hinausgehen. Dies ist von dem einstellbaren Mindestabstand zwischen der Dreschtrommel 7 und dem Dreschkorb 14 abhängig. Das Befestigungselement 26 ist der Kontur des Abschnittes zwischen den Tragprofilen 23 auf der Dreschtrommel 7 entsprechend ausgeführt, so dass es im Wesentlichen flächig auf der Mantelfläche 22 beziehungsweise den Randabschnittes der zueinander benachbarten Tragprofile 23 aufliegt. Das jeweilige Leitelement 25 ist derart auf der Dreschtrommel 7 ausgerichtet, dass es einen sich in Rotationsrichtung DR der Dreschtrommel 7 verjüngenden Verlauf aufweist. Die Leitelemente 25 können lösbar an der Dreschtrommel 7 befestigt sein. Hierzu kann, wie in Fig. 2 angedeutet der Befestigungsabschnitt 26 des jeweiligen Leitelementes 25 mit den Tragprofilen 23 durch eine Schraubverbindung verbunden sein.

In Fig. 3 ist eine Draufansicht auf die Dreschtrommel 7 gemäß Fig. 2 dargestellt. Die Leitelemente 25 sind in Umfangsrichtung der Dreschtrommel 7 im Wesentlichen fluchtend hintereinander angeordnet. Wie der Darstellung in Fig. 3 zu entnehmen ist, ist das jeweilige Leitelement 25 beziehungsweise der Leitabschnitt 27 zu einer senkrecht zur Rotationsachse R der Dreschtrommel 7 stehenden Bezugsebene unter einem Winkel α, β zu der Bezugsebene geneigt angeordnet. Aufgrund der V-förmigen beziehungsweise keilförmigen Ausführung des Leitabschnittes 27 können die Winkel α und β aus Symmetriegründen und zur Vereinfachung der Fertigung gleich oder nahezu gleich groß sein. Denkbar ist auch eine Variation der Winkel α und β, das heißt, dass die Winkel α und β ungleich sind. Die Winkel α und β sind insbesondere größer als 15°und kleiner als 45°gewählt. Besonders bevorzugt liegen die Winkel α und β zwischen 22,5° und 32,5°. Der Öffnungswinkel der V- beziehungsweis e keilförmigen Leitabschnitte 27, der sich aus der Summierung der Winkel α und β ergibt, liegt vorteilhafterweise zwischen 35°und 75°, besonders bevorzug zwischen 45° und 65°. Um die angestrebte Unterstützung bei der Aufteilung des Erntegutstromes im Bereich der Dreschtrommel 7 zu erreichen, ist die Ausführung des Leitelementes mit einem spitzen Winkel von Vorteil. Das Auftrennen und seitliche Ableiten des Erntegutstromes wird durch den spitzen Winkel begünstigt.

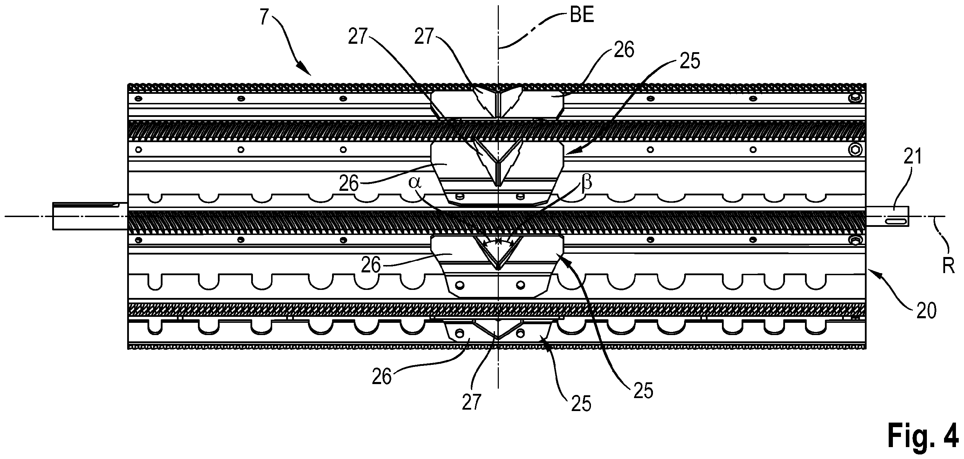

Fig. 4 zeigt eine Dreschtrommel 7, deren darauf angeordnete Leitelemente 25 beziehungsweise deren Leitabschnitte 27 sich ausgehend von einer Schlagleiste 23 nur abschnittsweise in tangentialer Richtung der Dreschtrommel erstrecken. Im Übrigen ist die Ausgestaltung der Dreschtrommel 7 entsprechend der in den Fig. 2 und 3 dargestellten Ausführungsform.

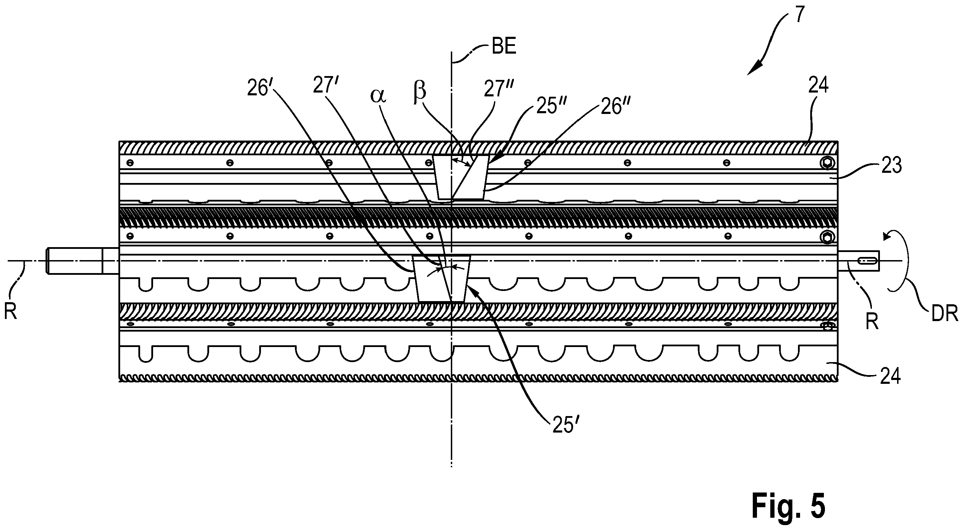

In Fig. 5 ist eine Draufsicht auf eine geschlossene Dreschtrommel 7 dargestellt, auf welcher Leitelemente 25' gemäß einer dritten Ausführungsform angeordnet sind. Die Leitelemente 25' weisen einen Befestigungsabschnitt 26' auf, auf welchem ein Leitabschnitt 27' angeordnet ist. Der Leitabschnitt 27' ist als ein plattenförmige Abschnitt ausgeführt, welcher sich in tangentialer Richtung zwischen zwei benachbarten Schlagleisten 24 erstreckt. Der Leitabschnitt 27' schließt mit der senkrecht zur Rotationsachse R der Dreschtrommel 7 stehenden Bezugsebene BE einen Winkel α' ein. Ein nachfolgendes Leitelement 25' weist einen an der Bezugsebene gespiegelt angeordneten Leitabschnitt 27" auf. Die Anordnung der Leitelemente 25' variiert gegenüber der gemäß Fig. 3 dargestellten dahingehend, dass die Leitelemente 25' beziehungsweise die Leitabschnitte 27" in Umfangsrichtung der Dreschtrommel 7 wechselweise versetzt zueinander angeordnet sind.

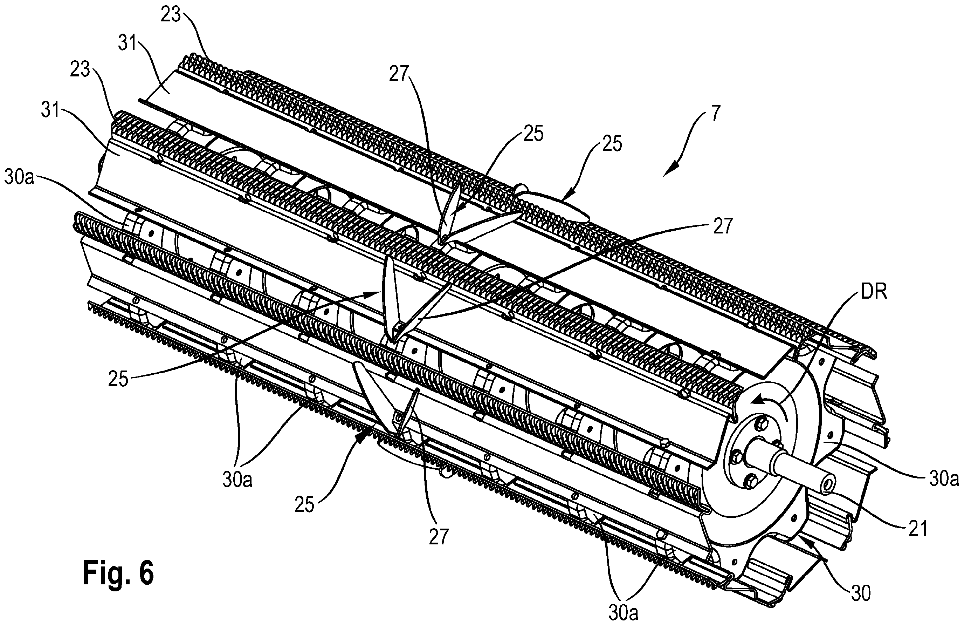

Die Darstellung in Fig. 6 zeigt eine perspektivische Ansicht einer offen ausgeführten Dreschtrommel 7. Die Dreschtrommel 7 weist zumindest zwei zylindrische Grundelemente 30a auf, die scheibenförmig ausgebildet sind und einen Trommelkörper 30 ausbilden. Die zumindest zwei Grundelemente 30a sind beabstandet zueinander auf der Antriebswelle 21 angeordnet und beispielsweise mittels einer Flanschverbindung mit dieser drehfest verbunden. Vorzugsweise sind mehr als zwei Grundelemente 30a auf der Antriebswelle 21 angeordnet. Die scheibenförmigen Grundelemente 30a weisen auf ihrem Umfang zueinander beabstandete, sich in radialer Richtung nach außen erstreckende Erhebungen auf, die der Anordnung und/oder Befestigung der sich über die Breite der Dreschtrommel 7 erstreckenden Schlagleisten 23 dienen. Die Darstellung zeigt weiterhin Abdeckbleche 31, die zwischen den Schlagleisten 23 auf den scheibenförmigen Grundelementen 30a lösbar angeordnet werden können. Mittels der Abdeckbleche 31 kann die Dreschtrommel 7 zumindest abschnittsweise in tangentialer und axialer Richtung verschlossen werden. Auf den Abdeckblechen 31 sind die sich in radialer Richtung und zumindest abschnittsweise in tangentialer Richtung der Dreschtrommel 7 erstreckenden Leitelemente 25 angeordnet. Die Leitelemente 25 umfassen nur die Leitabschnitte 27, da das jeweilige Abdeckblech 31 gemäß dieser Ausführungsform im Sinne eines Befestigungsabschnitt fungiert. Der jeweilige Leitabschnitt 27 des Leitelementes 25 ist vorzugsweise auf das Abdeckblech 31 aufgeschweißt. Wie bereits weiter oben ausgeführt, sind die Leitelemente 25 beziehungsweise die Leitabschnitte 27 V-förmig oder keilförmig ausgeführt.

Eine alternative Ausführungsform einer offen ausgeführten Dreschtrommel 7 sieht vor, dass die Leitelemente 25 unmittelbar an zueinander benachbarten Schlagleisten 23 befestigbar sind. Ebenfalls denkbar ist, dass die Leitelemente 25 an einem im Wesentlichen mittig angeordneten scheibenförmigen Grundelementen 30a befestigbar sind. Diese Alternativen erlauben den Verzicht auf Abdeckbleche 31 mit darauf befestigten Leitelementen 25 beziehungsweise gestatten die Verwendung von konventionellen Abdeckblechen ohne darauf angeordneten Leitelementen, wenn die Leitelemente 25 lösbar an den Schlagleisten 23 oder einem der scheibenförmigen Grundelemente 30a befestigbar sind.

**Bezugszeichenliste**

| | | | |
|---|---|---|---|
| **1** | Mähdrescher | **30** | Trommelkörper |
| **2** | Drescheinrichtung | **30a** | Grundelement |
| **3** | Abscheidevorrichtung | **31** | Abdeckblech |
| **4** | Reinigungseinrichtung | | |
| **5** | Gebläse | **GS** | Gutstrom |
| **6** | Schrägförderer | **FR** | Fahrtrichtung |
| **7** | Dreschtrommel | **DR** | Rotationsrichtung |
| **8** | Fördermittel | **R** | Rotationsachse |
| **9** | Rotorgehäuse | **BE** | Bezugsebene |
| **10** | Trennrotor | **α** | Winkel |
| **11** | Einlaufbereich | **β** | Winkel |
| **12** | Abscheidebereich | | |
| **13** | Zuführtrommel | | |
| **14** | Dreschkorb | | |
| **15** | Förderelemente | | |
| **16** | Kernrohr | | |
| | | | |
| **20** | Trommelkörper | | |
| **20a** | Grundelement | | |
| **21** | Antriebswelle | | |
| **22** | Mantelfläche | | |
| **23** | Tragprofil | | |
| **24** | Schlagleiste | | |
| **25** | Leitelement | | |
| **25'** | Leitelement | | |
| **26** | Befestigungsabschnitt | | |
| **26'** | Befestigungsabschnitt | | |
| **27** | Leitabschnitt | | |
| **27'** | Leitabschnitt | | |

## Patentansprüche

1. Dreschtrommel (7), umfassend einen zumindest aus einem zylindrischen Grundelement (20a, 30a) gebildeten Trommelkörper (20, 30), über dessen oder deren Umfang verteilt mehrere, zueinander beabstandete Schlagleisten (24) angeordnet sind, die sich über die Breite des Trommelkörpers (20, 30) erstrecken und die den Trommelkörper (20, 30) in radialer Richtung abschnittsweise überragen, **dadurch gekennzeichnet, dass** zwischen zwei zueinander beabstandeten Schlagleisten (24) jeweils zumindest ein sich in radialer und zumindest abschnittsweise in tangentialer Richtung erstreckendes Leitelement (25, 25') angeordnet ist, welches zu einer senkrecht zur Rotationsachse (R) der Dreschtrommel (7) stehenden Bezugsebene (BE) unter einem Winkel (α,β) zu dieser geneigt ist.

2. Dreschtrommel (7) nach Anspruch 1, **dadurch gekennzeichnet, dass** das jeweilige Leitelement (25, 25') derart auf der Dreschtrommel (7) ausgerichtet ist, dass es einen sich in Rotationsrichtung (DR) der Dreschtrommel (7) verjüngenden Verlauf in Bezug auf die Bezugsebene (BE) aufweist.

3. Dreschtrommel (7) nach einem der Ansprüche 1 oder 2, **dadurch gekennzeichnet, dass** das jeweilige Leitelement (25, 25') eine zumindest bis zum Hüllkreis der Schlagleisten (24) reichende radiale Erstreckung aufweist.

4. Dreschtrommel (7) nach einem der Ansprüche 1 bis 3, **dadurch gekennzeichnet, dass** die Leitelemente (25, 25') in Umfangsrichtung der Dreschtrommel (7) im Wesentlichen fluchtend hintereinander angeordnet sind.

5. Dreschtrommel (7) nach einem der Ansprüche 1 bis 3, **dadurch gekennzeichnet, dass** die Leitelemente (25, 25') in Umfangsrichtung der Dreschtrommel (7) wechselweise versetzt angeordnet sind.

6. Dreschtrommel (7) nach einem der Ansprüche 1 bis 5, **dadurch gekennzeichnet, dass** die Leitelemente (25, 25') im Wesentlichen mittig auf der Dreschtrommel (7) angeordnet sind.

7. Dreschtrommel (7) nach einem der Ansprüche 1 bis 6, **dadurch gekennzeichnet, dass** die Leitelemente (25, 25') lösbar an der Dreschtrommel (7) befestigt sind.

8. Dreschtrommel (7) nach einem der Ansprüche 1 bis 7, **dadurch gekennzeichnet, dass** das jeweilige Leitelement (25, 25') auf einem Befestigungsabschnitt (26, 26') angeordnet ist, dessen Form an die Außenkontur der Dreschtrommel (7) zwischen den Schlagleisten (24) angepasst ist.

9. Dreschtrommel (7) nach Anspruch 8, **dadurch gekennzeichnet, dass** sich der Befestigungsabschnitt (26, 26') abschnittsweise in axialer und tangentialer Richtung der Dreschtrommel (7) erstreckt.

10. Dreschtrommel (7) nach einem der Ansprüche 1 bis 9, **dadurch gekennzeichnet, dass** die Dreschtrommel (7) einen hohlzylindrischen Trommelkörper (20) aufweist, auf dem die Schlagleisten (24) mittelbar oder unmittelbar angeordnet sind.

11. Dreschtrommel (7) nach Anspruch 10, **dadurch gekennzeichnet, dass** die Dreschtrommel (7) eine geschlossene Mantelfläche (22) aufweist.

12. Dreschtrommel (7) nach einem der Ansprüche 1 bis 10, **dadurch gekennzeichnet, dass** die Dreschtrommel (7) offen ausgeführt ist.

13. Dreschtrommel (7) nach Anspruch 12, **dadurch gekennzeichnet, dass** die offen ausgeführte Dreschtrommel (7) mit Abdeckblechen (31) zumindest abschnittsweise verschließbar ist, welche auf ihrer dem Trommelinneren abgewandten Seite mit Leitelementen (25') versehen sind.

14. Dreschtrommel (7) nach Anspruch 13, **dadurch gekennzeichnet, dass** die Leitelemente (25') auf die Abdeckbleche (31) aufgeschweißt sind.

15. Mähdrescher (1), mit einem nach dem Axialflussprinzip arbeitenden Abscheidevorrichtung (3), **gekennzeichnet durch** eine Drescheinrichtung (2) mit zumindest einer Dreschtrommel (7) nach einem der Ansprüche 1 bis 14.

## Claims

1. A threshing drum (7) including a drum body (20, 30) formed at least from a cylindrical main element (20a, 30a) and over the periphery of which a plurality of mutually spaced beater bars (24) are arranged in distributed relationship, which extend over the width of the drum body (20, 30) and project portion-wise in the radial direction beyond the drum body (20, 30), **characterised in that** arranged between two mutually spaced beater bars (24) is at least one respective guide element (25, 25') which extends in the radial direction and at least portion-wise in the tangential direction and which in relation to a reference plane (BE) perpendicular to the axis of rotation (R) of the threshing drum (7) is inclined at an angle (α, β) in relation thereto.

2. A threshing drum (7) according to claim 1 **characterised in that** the respective guide element (25, 25') is oriented on the threshing drum (7) in such a way that in relation to the reference plane (BE) it is of a configuration which narrows in the direction of rotation (DR) of the threshing drum (7).

3. A threshing drum (7) according to one of claims 1 and 2 **characterised in that** the respective guide element (25, 25') is of a radial extent extending at least as far as the envelope circle of the beater bars (24).

4. A threshing drum (7) according to one of claims 1 to 3 **characterised in that** the guide elements (25, 25') are arranged in substantially aligned relationship one behind the other in the peripheral direction of the threshing drum (7).

5. A threshing drum (7) according to one of claims 1 to 3 **characterised in that** the guide elements (25, 25') are arranged in alternately displaced relationship in the peripheral direction of the threshing drum (7).

6. A threshing drum (7) according to one of claims 1 to 5 **characterised in that** the guide elements (25, 25') are arranged substantially centrally on the threshing drum (7).

7. A threshing drum (7) according to one of claims 1 to 6 **characterised in that** the guide elements (25, 25') are fixed releasably to the threshing drum (7).

8. A threshing drum (7) according to one of claims 1 to 7 **characterised in that** the respective guide element (25, 25') is arranged on a fixing portion (26, 26'), the shape of which is adapted to the external contour of the threshing drum (7) between the beater bars (24).

9. A threshing drum (7) according to claim 8 **characterised in that** the fixing portion (26, 26') extends portion-wise in the axial and tangential directions of the threshing drum (7).

10. A threshing drum (7) according to one of claims 1 to 9 **characterised in that** the threshing drum (7) has a hollow-cylindrical drum body (20) on which the beater bars (24) are directly or indirectly arranged.

11. A threshing drum (7) according to claim 10 **characterised in that** the threshing drum (7) has a closed peripheral surface (22).

12. A threshing drum (7) according to one of claims 1 to 10 **characterised in that** the threshing drum (7) is of an open structure.

13. A threshing drum (7) according to claim 12 **characterised in that** the open-structure threshing drum (7) is at least portion-wise closable with cover plates (31) provided with guide elements (25') on their side facing away from the drum interior.

14. A threshing drum (7) according to claim 13 **characterised in that** the guide elements (25') are welded on to the cover plates (31).

15. A mowing thresher (1) having a separating device (3) operating in accordance with the axial flow principle, **characterised by** a threshing device (2) having at least one threshing drum (7) according to one of claims 1 to 14.

## Revendications

1. Batteur (7) comprenant un corps de batteur (20, 30) qui est formé au moins d'un élément de base cylindrique (20a, 30a) et sur la périphérie duquel sont disposées de façon répartie plusieurs battes distantes les unes des autres (24), lesquelles s'étendent sur la largeur du corps de batteur (20, 30) et dépassent par endroits du corps de batteur (20, 30) dans la direction radiale, **caractérisé en ce qu'**entre deux battes distantes les unes des autres (24) est disposé à chaque fois au moins un élément de guidage (25, 25') qui s'étend dans la direction radiale et au moins par endroits dans la direction tangentielle et qui est incliné selon un angle (α, β) par rapport à un plan de référence (BE) perpendiculaire à l'axe de rotation (R) du batteur (7).

2. Batteur (7) selon la revendication 1, **caractérisé en ce que** chaque élément de guidage (25, 25') est orienté sur le batteur (7) de façon à présenter un profil qui, par rapport au plan de référence (BE), se rétrécit dans le sens de rotation (DR) du batteur (7).

3. Batteur (7) selon une des revendications 1 ou 2, **caractérisé en ce que** chaque élément de guidage (25, 25') présente une extension radiale atteignant au moins le cercle d'enveloppe des battes (24).

4. Batteur (7) selon une des revendications 1 à 3, **caractérisé en ce que** les éléments de guidage (25, 25') sont disposés de manière sensiblement alignée les uns derrière les autres dans la direction circonférentielle du batteur (7).

5. Batteur (7) selon une des revendications 1 à 3, **caractérisé en ce que** les éléments de guidage (25, 25') sont disposés de manière alternativement décalée dans la direction circonférentielle du batteur (7).

6. Batteur (7) selon une des revendications 1 à 5, **caractérisé en ce que** les éléments de guidage (25, 25') sont disposés sensiblement au centre du batteur (7).

7. Batteur (7) selon une des revendications 1 à 6, **caractérisé en ce que** les éléments de guidage (25, 25') sont fixés sur le batteur (7) de façon amovible.

8. Batteur (7) selon une des revendications 1 à 7, **caractérisé en ce que** chaque élément de guidage (25, 25') est disposé sur une portion de fixation (26, 26') dont la forme est adaptée au contour extérieur du batteur (7) entre les battes (24).

9. Batteur (7) selon la revendication 8, **caractérisé en ce que**, par endroits, la portion de fixation (26, 26') s'étend dans les directions axiale et tangentielle du batteur (7).

10. Batteur (7) selon une des revendications 1 à 9, **caractérisé en ce que** le batteur (7) présente un corps de batteur cylindrique creux (20) sur lequel les battes (24) sont disposées de façon indirecte ou directe.

11. Batteur (7) selon la revendication 10, **caractérisé en ce que** le batteur (7) présente une surface latérale fermée (22).

12. Batteur (7) selon une des revendications 1 à 10, **caractérisé en ce que** le batteur (7) est de conception ouverte.

13. Batteur (7) selon la revendication 12, **caractérisé en ce que** le batteur de conception ouverte (7) peut être fermé au moins par endroits avec des tôles de recouvrement (31) qui, sur leur côté opposé à l'intérieur du batteur, sont munies d'éléments de guidage (25').

14. Batteur (7) selon la revendication 13, **caractérisé en ce que** les éléments de guidage (25') sont soudés sur les tôles de recouvrement (31).

15. Moissonneuse-batteuse (1) comprenant un dispositif de séparation (3) fonctionnant selon le principe du flux axial, **caractérisée par** un équipement de battage (2) comprenant au moins un batteur (7) selon une des revendications 1 à 14.
